(19) Europäisches Patentamt
European Patent Office
Office européen des brevets

(11) **EP 4 708 978 A1**

(12) **EUROPEAN PATENT APPLICATION**
published in accordance with Art. 153(4) EPC

(43) Date of publication:
**11.03.2026 Bulletin 2026/11**

(21) Application number: **24858221.5**

(22) Date of filing: **02.08.2024**

(51) International Patent Classification (IPC):
**H04W 52/02** (2009.01)

(52) Cooperative Patent Classification (CPC):
**G01S 5/02; H04J 3/06; H04W 52/02; H04W 56/00**

(86) International application number:
**PCT/CN2024/109506**

(87) International publication number:
**WO 2025/044678 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.08.2023 CN 202311097513**

(71) Applicant: **Huawei Technologies Co., Ltd.
Shenzhen, Guangdong 518129 (CN)**

(72) Inventor: **WANG, Kang
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **RANGING-BASED LOCALIZATION METHOD, APPARATUS AND SYSTEM**

(57) This application provides a ranging and positioning method and system, and an apparatus. The method includes: A first device receives first configuration information, second configuration information, and third configuration information through a first communication frequency band, and receives first ranging information, second ranging information, and third ranging information through a second communication frequency band. A bandwidth used in the second communication frequency band is greater than a bandwidth used in the first communication frequency band. After completing time synchronization with a first terminal device in the first communication frequency band based on the first configuration information, the first device determines a moment at which the first ranging information arrives, and receives the first ranging information. A location of the first device is determined based on time differences of arrival between the first ranging information, the second ranging information, and the third ranging information. The method can reduce operating power consumption of a receiving device and enhance battery endurance of the device.

FIG. 7

## EP 4 708 978 A1

**Description**

This application claims priority to Chinese Patent Application No. 202311097513.4, filed with the China National Intellectual Property Administration on August 29, 2023 and entitled "RANGING AND POSITIONING METHOD AND SYSTEM, AND APPARATUS", which is incorporated herein by reference in its entirety.

## TECHNICAL FIELD

This application relates to the communication field, and in particular, to a ranging and positioning method and system, and an apparatus.

## BACKGROUND

Development of science and technology leads to increasingly extensive application of ultra-wideband (ultra wide band, UWB) ranging and positioning technologies. A UWB communication system uses a pulse whose pulse width is at only a nanosecond level as a basic signal. The UWB communication system occupies a large bandwidth and features a high transmission rate, a large system capacity, and the like. It can still implement ranging and positioning in a complex multipath environment, has a good anti-multipath capability, and has become a research hotspot currently.

When UWB ranging is used, a receiving device needs to continuously receive an ultra-wideband signal. Due to a large bandwidth of the UWB signal, a chip of the receiving device has high power consumption, and the device has low battery endurance. In addition, a UWB standard specifies that a power spectral density cannot exceed -41.3 dBm/MHz, resulting in a limited transmit power and transmission distance of a transmitting device.

Therefore, how to reduce operating power consumption of a receiving device is an urgent problem to be resolved.

## SUMMARY

This application provides a ranging and positioning method and system, and an apparatus, which can reduce operating power consumption of a receiving device and enhance battery endurance of the device.

According to a first aspect, a ranging and positioning method is provided. A first device receives first configuration information, second configuration information, and third configuration information through a first communication frequency band, and receives first ranging information, second ranging information, and third ranging information through a second communication frequency band. A bandwidth used in the second communication frequency band is greater than a bandwidth used in the first communication frequency band. After completing time synchronization with a first terminal device in the first communication frequency band based on the first configuration information, the first device determines a moment at which the first ranging information arrives, and receives the first ranging information. A location of the first device is determined based on time differences of arrival between the first ranging information, the second ranging information, and the third ranging information.

Based on this technical solution, the first device receives configuration information through the first communication frequency band, and receives ranging information through the second communication frequency band. The first device may complete, in the first communication frequency band based on the configuration information, time synchronization with a terminal device that sends the configuration information, to determine a moment for receiving the ranging information through the second communication frequency band. Time synchronization does not need to be performed again in the second communication frequency band. This can reduce operating power consumption of the first device and enhance battery endurance of the device.

It should be understood that the first device includes a device on which positioning and ranging need to be performed, namely, a receiving device in a ranging system. In some embodiments, the first device includes a mobile phone, a vehicle, a terminal device marked with a tag (tag), or the like. This is not specifically limited in this application.

It should be understood that in an optional implementation, the first terminal device sends the first configuration information. The first configuration information includes broadcast information. The first device receives the first configuration information, and completes time synchronization with the first terminal device through the first configuration information. A second terminal device sends second configuration information. The second configuration information includes broadcast information. The first device receives the second configuration information, and completes time synchronization with the second terminal device through the second configuration information. A third terminal device sends the third configuration information. The third configuration information includes broadcast information. The first device receives the third configuration information, and completes time synchronization with the third terminal device through the third configuration information.

It should be understood that the first communication frequency band includes a narrowband communication frequency band, and the second communication frequency band includes a wideband communication frequency band.

The wideband communication frequency band includes a communication frequency band greater than or equal to 499.2 MHz.

It should be understood that the configuration information is also referred to as a narrowband signal, narrowband information, a narrowband frame, or the like in some embodiments; and the ranging information is also referred to as a wideband signal, wideband information, a wideband frame, or the like in some embodiments. These are merely names. A specific protection scope is subject to the claims. This is not limited in this application.

It should be understood that locations of the first terminal device, the second terminal device, and the third terminal device are known or preset. The first device resolves a difference between distances from the first device to the first terminal device and the second terminal device, and a difference between distances from the first device to the second terminal device and the third terminal device based on the time differences of arrival between the received first ranging information, second ranging information, and third ranging information, and resolves the distances from the first device to the three terminal devices and a relative location based on the distance differences. Calculating the distance differences based on the time differences to perform positioning resolution disclosed herein is merely a specific implementation of determining the location of the first device. This is not specifically limited in this application. A specific protection scope is subject to the claims.

It should be understood that the first device may perform ranging and positioning resolution on the location of the first device based on the distance differences. Alternatively, the first device may send the ranging information to another computing engine device for ranging and positioning resolution. This is not specifically limited in this application.

It should be understood that in the ranging and positioning method provided in this application, a plurality of first devices may be further included, and ranging and positioning are performed on the plurality of first devices. The other first devices may also be referred to as a second device, a third device, and the like. This is not specifically limited in this application.

It should be understood that in the ranging and positioning method provided in this application, a plurality of terminal devices may be further included. More terminal devices at known locations lead to higher resolution accuracy of a device at a to-be-measured location and a larger ranging range. This is not specifically limited in this application.

With reference to the first aspect, in some implementations of the first aspect, after determining the moment at which the first ranging information arrives, the first device enables the second communication frequency band to receive the first ranging information, and disables the second communication frequency band after receiving the first ranging information.

Based on this technical solution, the second communication frequency band may remain in a normally disabled state. The second communication frequency band is enabled to receive the ranging information before the ranging information is received, and is disabled after the ranging information is received. Due to a wide bandwidth in the second communication frequency band, the normally disabled state can further reduce operating power consumption of the receiving device and enhance battery endurance of the device.

It should be understood that in an optional implementation, after receiving the first configuration information, the first device completes time synchronization with the first terminal device and determines the moment at which the first ranging information arrives; before the moment, enables the second communication frequency band in advance to receive the first ranging information; and disables the second communication frequency band after receiving the first ranging information. After receiving the second configuration information, the first device completes time synchronization with the second terminal device and determines a moment at which the second ranging information arrives; before the moment, enables the second communication frequency band in advance to receive the second ranging information; and disables the second communication frequency band again after receiving the second ranging information. After receiving the third configuration information, the first device completes time synchronization with the third terminal device and determines a moment at which the third ranging information arrives; before the moment, enables the second communication frequency band in advance to receive the third ranging information; and disables the second communication frequency band again after receiving the third ranging information.

With reference to the first aspect, in some implementations of the first aspect, the first device determines, based on the first configuration information, the moment at which the second ranging information arrives and the moment at which the third ranging information arrives.

Based on this technical solution, the first device may further determine, based on the first configuration information, moments at which ranging information sent by the other terminal devices arrives. The first device may estimate reception moments based on the determined arrival moments, to control the second communication frequency band to be enabled or disabled to receive the ranging information. This can further reduce the operating power consumption of the receiving device and enhance the battery endurance of the device.

It should be understood that in an optional implementation, the first configuration information sent by the first terminal device includes a data field used to determine moments at which the other terminal devices send the ranging information. When the other terminal devices send configuration information, the configuration information may no longer carry a data field used to determine a moment at which the ranging information arrives, so that signaling overheads can be reduced.

With reference to the first aspect, in some implementations of the first aspect, after receiving the first configuration information, the first device disables the first communication frequency band, determines, based on the first configuration information, a moment at which the second configuration information arrives, and enables the first communication frequency band again to receive the second configuration information.

Based on this technical solution, the first device may further determine, based on the first configuration information, moments at which configuration information sent by the other terminals arrives, to control the first communication frequency band to be enabled or disabled to receive the configuration information. This can further reduce the operating power consumption of the receiving device and enhance the battery endurance of the device.

It should be understood that in an optional implementation, after receiving the first configuration information, the first device disables the first communication frequency band, determines, based on the first configuration information, the moment at which the second configuration information sent by the second terminal device arrives, and enables the first communication frequency band again to receive the second configuration information. After receiving the second configuration information, the first device disables the first communication frequency band again, determines, based on the first configuration information, the moment at which the third configuration information sent by the third terminal device arrives, and enables the first communication frequency band again to receive the third configuration information. After receiving the third configuration information, the first device disables the first communication frequency band again.

With reference to the first aspect, in some implementations of the first aspect, the first configuration information includes device information of the first terminal device, a device synchronization signal, time setting information, and a data field. The first ranging information includes a ranging frame, and does not include the data field.

Based on this technical solution, the first configuration information includes the device information of the first terminal device, a synchronization signal between the first terminal device and the first device, time setting information for sending other configuration information or other ranging information, the data field, and the like. The first ranging information does not repeatedly include the data field existing in the first configuration information, and mainly includes the ranging frame. Reducing a field length of the ranging information can reduce signaling overheads to some extent, shorten a time period in which the first device receives the ranging information, and reduce a time period in which the second communication frequency band is enabled, to further reduce the operating power consumption of the receiving device and enhance the battery endurance of the device.

With reference to the first aspect, in some implementations of the first aspect, the first device estimates first carrier frequency offset CFO information of the first terminal device based on the first configuration information, and completes time synchronization with the first terminal device in the first communication frequency band based on the first CFO information. The first device determines, based on the first CFO information, a moment for receiving the first ranging information through the second communication frequency band.

Based on this technical solution, the first device estimates the CFO information between itself and the first terminal device based on the first configuration information, to complete time synchronization with the first terminal device in the first communication frequency band based on the CFO information. Because the first device completes time synchronization with the first terminal device in the first communication frequency band, when the first terminal device sends information to the first device through the second communication frequency band, time synchronization does not need to be performed again. The first device directly determines, based on the CFO information, a moment for enabling the second communication frequency band to receive the first ranging information. This further reduces the operating power consumption of the receiving device and enhances the battery endurance of the device.

It should be understood that in an optional implementation, the first device completes time synchronization with the first terminal device based on the first configuration information, to determine, with reference to the moment at which the first ranging information arrives, the moment for enabling the second communication frequency band to receive the first ranging information. The first device completes time synchronization with the second terminal device based on the second configuration information, to determine, with reference to the moment at which the second ranging information arrives, a moment for enabling the second communication frequency band to receive the second ranging information. The first device completes time synchronization with the third terminal device based on the third configuration information, to determine, with reference to the moment at which the third ranging information arrives, a moment for enabling the second communication frequency band to receive the third ranging information.

With reference to the first aspect, in some implementations of the first aspect, before the first terminal device sends the first configuration information, the first terminal device completes time synchronization with another terminal device that sends configuration information.

Based on this technical solution, before sending the first configuration information, the first terminal device completes time synchronization with the second terminal device and the third terminal device, so that all terminal devices that are configured to send the configuration information and the ranging information share a same clock source. In this way, ranging and positioning resolution can be performed more accurately by using the time differences of arrival between the ranging information, to improve ranging and positioning accuracy.

According to a second aspect, a ranging and positioning method is provided. A first terminal device sends first configuration information through a first communication frequency band, and sends first ranging information through a second communication frequency band. A first device receives the first configuration information, completes time synchronization with the first terminal device in the first communication frequency band based on the first configuration information, determines a moment at which the first ranging information arrives, and receives the first ranging information. A bandwidth used in the second communication frequency band is greater than a bandwidth used in the first communication frequency band. A second terminal device sends second configuration information through the first communication frequency band, and sends second ranging information through the second communication frequency band. The first device receives the second configuration information, completes time synchronization with the second terminal device in the first communication frequency band based on the second configuration information, determines a moment at which the second ranging information arrives, and receives the second ranging information. A third terminal device sends third configuration information through the first communication frequency band, and sends third ranging information through the second communication frequency band. The first device receives the third configuration information, completes time synchronization with the third terminal device in the first communication frequency band based on the third configuration information, determines a moment at which the third ranging information arrives, and receives the third ranging information. A location of the first device is determined based on time differences of arrival between the first ranging information, the second ranging information, and the third ranging information.

Based on this technical solution, a terminal device sends configuration information through the first communication frequency band, and sends ranging information through the second communication frequency band. The first device receives the configuration information and the ranging information in the corresponding frequency bands, and completes time synchronization with the terminal device based on the configuration information. The first device further determines, based on the configuration information, a moment for enabling the second communication frequency band to receive the ranging information. The first device does not need to perform time synchronization again in the second communication frequency band. This can reduce operating power consumption of the first device and enhance battery endurance of the device.

With reference to the second aspect, in some implementations of the second aspect, after determining the moment at which the first ranging information arrives, the first device enables the second communication frequency band to receive the first ranging information, and disables the second communication frequency band after receiving the first ranging information.

Based on this technical solution, the second communication frequency band may remain in a normally disabled state. The second communication frequency band is enabled to receive the ranging information before the ranging information is received, and is disabled after the ranging information is received. Due to a wide bandwidth in the second communication frequency band, the normally disabled state can further reduce operating power consumption of the receiving device and enhance battery endurance of the device.

With reference to the second aspect, in some implementations of the second aspect, the first device determines, based on the first configuration information, the moment at which the second ranging information arrives and the moment at which the third ranging information arrives.

Based on this technical solution, the first device may further determine, based on the first configuration information, moments at which ranging information sent by the other terminal devices arrives. The first device may estimate reception moments based on the determined arrival moments, to control the second communication frequency band to be enabled or disabled to receive the ranging information. This can further reduce the operating power consumption of the receiving device and enhance the battery endurance of the device.

With reference to the second aspect, in some implementations of the second aspect, after receiving the first configuration information, the first device disables the first communication frequency band, determines, based on the first configuration information, a moment at which the second configuration information arrives, and enables the first communication frequency band to receive the second configuration information.

Based on this technical solution, the first device may further determine, based on the first configuration information, moments at which configuration information sent by the other terminals arrives, to control the first communication frequency band to be enabled or disabled to receive the configuration information. This can further reduce the operating power consumption of the receiving device and enhance the battery endurance of the device.

With reference to the second aspect, in some implementations of the second aspect, the first configuration information includes device information of the first terminal device, a device synchronization signal, time setting information, and a data field. The first ranging information includes a ranging frame, and does not include the data field.

Based on this technical solution, the first configuration information includes the device information of the first terminal device, a synchronization signal between the first terminal device and the first device, time setting information for sending other configuration information or other ranging information, the data field, and the like. The first ranging information does not repeatedly include the data field existing in the first configuration information, and mainly includes the ranging frame. Reducing a field length of the ranging information can reduce signaling overheads to some extent, shorten a time period in which the first device receives the ranging information, and reduce a time period in which the second communication frequency band is enabled, to further reduce the operating power consumption of the receiving device and enhance the battery endurance of the device.

With reference to the second aspect, in some implementations of the second aspect, the first device estimates first carrier frequency offset CFO information of the first terminal device based on the first configuration information, and completes time synchronization with the first terminal device in the first communication frequency band based on the first CFO information. The first device determines, based on the first CFO information, a moment for receiving the first ranging information through the second communication frequency band.

Based on this technical solution, the first device estimates the CFO information between itself and the first terminal device based on the first configuration information, to complete time synchronization with the first terminal device in the first communication frequency band based on the CFO information. Because the first device completes time synchronization with the first terminal device in the first communication frequency band, when the first terminal device sends information to the first device through the second communication frequency band, time synchronization does not need to be performed again. The first device directly determines, based on the CFO information, a moment for enabling the second communication frequency band to receive the first ranging information. This further reduces the operating power consumption of the receiving device and enhances the battery endurance of the device.

With reference to the second aspect, in some implementations of the second aspect, before the first terminal device sends the first configuration information, time synchronization is completed between the first terminal device, the second terminal device, and the third terminal device.

Based on this technical solution, before sending the first configuration information, the first terminal device completes time synchronization with the second terminal device and the third terminal device, so that all terminal devices that are configured to send the configuration information and the ranging information share a same clock source. In this way, ranging and positioning resolution can be performed more accurately by using the time differences of arrival between the ranging information, to improve ranging and positioning accuracy.

According to a third aspect, a communication apparatus is provided. The communication apparatus includes a first communication module, a second communication module, a control module, and a calculation module. Specifically, the first communication module is configured to receive first configuration information, second configuration information, and third configuration information that are transmitted in a first communication frequency band. The second communication module is configured to receive first ranging information, second ranging information, and third ranging information that are transmitted in a second communication frequency band. A bandwidth used in the second communication frequency band is greater than a bandwidth used in the first communication frequency band. The control module is configured to: after completing time synchronization with a first terminal device in the first communication frequency band based on the first configuration information, determine a moment at which the first ranging information arrives, and control the second communication module to receive the first ranging information. The calculation module is configured to determine a location of a first device based on time differences of arrival between the first ranging information, the second ranging information, and the third ranging information.

Based on this technical solution, the first device receives configuration information through the first communication module, and receives ranging information through the second communication module. The first device may complete, in the first communication frequency band based on the configuration information, time synchronization with a terminal device that sends the configuration information, to determine a moment for receiving the ranging information through the second communication module. Time synchronization does not need to be performed again in the second communication frequency band. This can reduce operating power consumption of the first device and enhance battery endurance of the device.

With reference to the third aspect, in some implementations of the third aspect, after determining the moment at which the first ranging information arrives, the control module controls the second communication module to be enabled to receive the first ranging information. After the first ranging information is received, the control module controls the second communication module to be disabled.

Based on this technical solution, the second communication module may remain in a normally disabled state. The second communication module is enabled to receive the ranging information before the ranging information is received, and is disabled after the ranging information is received. Because the second communication module uses a wide bandwidth, power consumption is high. The normally disabled state can further reduce operating power consumption of a receiving device and enhance battery endurance of the device.

With reference to the third aspect, in some implementations of the third aspect, the control module is configured to determine, based on the first configuration information, a moment at which the second ranging information arrives and a moment at which the third ranging information arrives.

Based on this technical solution, the first device may further determine, based on the first configuration information, moments at which ranging information sent by the other terminal devices arrives. The first device may estimate reception moments based on the determined arrival moments, to control the second communication module to be enabled or disabled to receive the ranging information. This can further reduce the operating power consumption of the receiving device and enhance the battery endurance of the device.

With reference to the third aspect, in some implementations of the third aspect, after the first communication module receives the first configuration information, the control module controls the first communication module to be disabled. The control module determines, based on the first configuration information, a moment at which the second configuration information arrives, and control the first communication module to be enabled and receive the second configuration information.

Based on this technical solution, the first device may further determine, based on the first configuration information, moments at which configuration information sent by the other terminals arrives, to control the first communication module to be enabled or disabled to receive the configuration information. This can further reduce the operating power consumption of the receiving device and enhance the battery endurance of the device.

With reference to the third aspect, in some implementations of the third aspect, the first configuration information includes device information of the first terminal device, a device synchronization signal, time setting information, and a data field. The first ranging information includes a ranging frame, and does not include the data field.

Based on this technical solution, the first configuration information includes the device information of the first terminal device, a synchronization signal between the first terminal device and the first device, time setting information for sending other configuration information or other ranging information, the data field, and the like. The first ranging information does not repeatedly include the data field existing in the first configuration information, and mainly includes the ranging frame. Reducing a field length of the ranging information can reduce signaling overheads to some extent, shorten a time period in which the first device receives the ranging information, and reduce a time period in which the second communication module is enabled, to further reduce the operating power consumption of the receiving device and enhance the battery endurance of the device.

With reference to the third aspect, in some implementations of the third aspect, the control module is configured to estimate first carrier frequency offset CFO information of the first terminal device based on the first configuration information, and complete time synchronization with the first terminal device in the first communication frequency band based on the first CFO information. The control module determines, based on the first CFO information, a moment for enabling the second communication module to receive the first ranging information.

Based on this technical solution, the first device estimates the CFO information between itself and the first terminal device based on the first configuration information, to complete time synchronization with the first terminal device in the first communication frequency band based on the CFO information. Because the first device completes time synchronization with the first terminal device in the first communication frequency band, when the first terminal device sends information to the first device through the second communication module, time synchronization does not need to be performed again. The first device directly determines, based on the CFO information, the moment for enabling the second communication module to receive the first ranging information. This further reduces the operating power consumption of the receiving device and enhances the battery endurance of the device.

According to a fourth aspect, a ranging and positioning method is provided. A second terminal device sends second configuration information through a first communication frequency band, and sends second ranging information through a second communication frequency band. A bandwidth used in the second communication frequency band is greater than a bandwidth used in the first communication frequency band. Before the second configuration information is sent, a first terminal device sends first configuration information through the first communication frequency band, and sends first ranging information through the second communication frequency band. After the second ranging information is sent, a third terminal device sends third configuration information through the first communication frequency band, and sends third ranging information through the second communication frequency band. The first configuration information includes information used to determine a moment for sending the first ranging information. The first configuration information further includes information used to complete time synchronization with the first terminal device. A location of a receiving device is determined based on time differences of arrival between the received first ranging information, second ranging information, and third ranging information.

Based on this technical solution, a terminal device sends configuration information through the first communication frequency band, and sends ranging information through the second communication frequency band. The receiving device receives the configuration information and the ranging information in the corresponding frequency bands, and completes time synchronization with the terminal device based on the configuration information. The receiving device further determines, based on the configuration information, a moment for enabling the second communication frequency band to receive the ranging information. The receiving device does not need to perform time synchronization again in the second communication frequency band. This can reduce operating power consumption of a first device and enhance battery endurance of the device.

With reference to the fourth aspect, in some implementations of the fourth aspect, after receiving the first configuration information and determining a moment at which the first ranging information arrives, the first device enables the second communication frequency band to receive the first ranging information. After receiving the first ranging information, the first device disables the second communication frequency band.

Based on this technical solution, the second communication frequency band may remain in a normally disabled state. The second communication frequency band is enabled to receive the ranging information before the ranging information is received, and is disabled after the ranging information is received. Due to a wide bandwidth in the second communication frequency band, the normally disabled state can further reduce operating power consumption of the receiving device and enhance battery endurance of the device.

With reference to the fourth aspect, in some implementations of the fourth aspect, the first device determines, based on the first configuration information, a moment at which the second ranging information arrives and a moment at which the third ranging information arrives.

Based on this technical solution, the first device may further determine, based on the first configuration information, moments at which ranging information sent by the other terminal devices arrives. The first device may estimate reception moments based on the determined arrival moments, to control the second communication frequency band to be enabled or disabled to receive the ranging information. This can further reduce the operating power consumption of the receiving device and enhance the battery endurance of the device.

With reference to the fourth aspect, in some implementations of the fourth aspect, after receiving the first configuration information, the first device disables the first communication frequency band, determines, based on the first configuration information, a moment at which the second configuration information arrives, and enables the first communication frequency band to receive the second configuration information.

Based on this technical solution, the first device may further determine, based on the first configuration information, moments at which configuration information sent by the other terminals arrives, to control the first communication frequency band to be enabled or disabled to receive the configuration information. This can further reduce the operating power consumption of the receiving device and enhance the battery endurance of the device.

With reference to the fourth aspect, in some implementations of the fourth aspect, the first configuration information includes device information of the first terminal device, a device synchronization signal, time setting information, and a data field. The first ranging information includes a ranging frame, and does not include the data field.

Based on this technical solution, the first configuration information includes the device information of the first terminal device, a synchronization signal between the first terminal device and the first device, time setting information for sending other configuration information or other ranging information, the data field, and the like. The first ranging information does not repeatedly include the data field existing in the first configuration information, and mainly includes the ranging frame. Reducing a field length of the ranging information can reduce signaling overheads to some extent, shorten a time period in which the first device receives the ranging information, and reduce a time period in which the second communication frequency band is enabled, to further reduce the operating power consumption of the receiving device and enhance the battery endurance of the device.

With reference to the fourth aspect, in some implementations of the fourth aspect, the first device estimates first carrier frequency offset CFO information of the first terminal device based on the first configuration information, and completes time synchronization with the first terminal device in the first communication frequency band based on the first CFO information. The first device determines, based on the first CFO information, a moment for receiving the first ranging information through the second communication frequency band.

Based on this technical solution, the first device estimates the CFO information between itself and the first terminal device based on the first configuration information, to complete time synchronization with the first terminal device in the first communication frequency band based on the CFO information. Because the first device completes time synchronization with the first terminal device in the first communication frequency band, when the first terminal device sends information to the first device through the second communication frequency band, time synchronization does not need to be performed again. The first device directly determines, based on the CFO information, a moment for enabling the second communication frequency band to receive the first ranging information. This further reduces the operating power consumption of the receiving device and enhances the battery endurance of the device.

With reference to the fourth aspect, in some implementations of the fourth aspect, before the first terminal device sends the first configuration information, time synchronization is completed between the first terminal device, the second terminal device, and the third terminal device.

Based on this technical solution, before sending the first configuration information, the first terminal device completes time synchronization with the second terminal device and the third terminal device, so that all terminal devices that are configured to send the configuration information and the ranging information share a same clock source. In this way, ranging and positioning resolution can be performed more accurately by using the time differences of arrival between the ranging information, to improve ranging and positioning accuracy.

According to a fifth aspect, a transmitting apparatus is provided. The transmitting apparatus includes a first terminal device, a second terminal device, and a third terminal device. Each terminal device includes a first communication module and a second communication module. Specifically, the first communication module in the second terminal device is configured to send second configuration information, and the second communication module in the second terminal device is configured to send second ranging information. A bandwidth used in the second communication module is greater than a bandwidth used in the first communication module. Before the second configuration information is sent, the first communication module in the first terminal device sends first configuration information, and the second communication module in the first terminal device sends first ranging information. After the second ranging information is sent, the first communication module in the third terminal device sends third configuration information, and the second communication module in the third terminal device sends third ranging information. The first configuration information includes information used to determine a moment for sending the first ranging information. The first configuration information further includes information used to complete time synchronization with the first terminal device. A location of a receiving device is determined based on time differences of arrival between the received first ranging information, second ranging information, and third ranging information.

Based on this technical solution, a terminal device sends configuration information through the first communication module, and sends ranging information through the second communication module. The receiving device receives the configuration information and the ranging information in corresponding frequency bands, and completes time synchronization with the terminal device based on the configuration information. The receiving device further determines, based on the configuration information, a moment for enabling the second communication module to receive the ranging information. The receiving device does not need to perform time synchronization again in a second communication frequency band. This can reduce operating power consumption of a first device and enhance battery endurance of the device.

With reference to the fifth aspect, in some implementations of the fifth aspect, after receiving the first configuration information and determining a moment at which the first ranging information arrives, the first device enables a second communication module in the first device to receive the first ranging information. After receiving the first ranging information, the first device disables the second communication module.

Based on this technical solution, the second communication module may remain in a normally disabled state. The second communication module is enabled to receive the ranging information before the ranging information is received, and is disabled after the ranging information is received. Because the second communication module uses a wide bandwidth, the normally disabled state can further reduce operating power consumption of the receiving device and enhance battery endurance of the device.

With reference to the fifth aspect, in some implementations of the fifth aspect, the first device determines, based on the first configuration information, a moment at which the second ranging information arrives and a moment at which the third ranging information arrives.

Based on this technical solution, the first device may further determine, based on the first configuration information, moments at which ranging information sent by the other terminal devices arrives. The first device may estimate reception moments based on the determined arrival moments, to control the second communication frequency band to be enabled or disabled to receive the ranging information. This can further reduce the operating power consumption of the receiving device and enhance the battery endurance of the device.

With reference to the fifth aspect, in some implementations of the fifth aspect, after receiving the first configuration information, the first device disables a first communication module, determines, based on the first configuration information, a moment at which the second configuration information arrives, and enables the first communication module to receive the second configuration information.

Based on this technical solution, the first device may further determine, based on the first configuration information, moments at which configuration information sent by the other terminals arrives, to control the first communication module to be enabled or disabled to receive the configuration information. This can further reduce the operating power consumption of the receiving device and enhance the battery endurance of the device.

With reference to the fifth aspect, in some implementations of the fifth aspect, the first configuration information includes device information of the first terminal device, a device synchronization signal, time setting information, and a data field. The first ranging information includes a ranging frame, and does not include the data field.

Based on this technical solution, the first configuration information includes the device information of the first terminal device, a synchronization signal between the first terminal device and the first device, time setting information for sending other configuration information or other ranging information, the data field, and the like. The first ranging information does not repeatedly include the data field existing in the first configuration information, and mainly includes the ranging frame. Reducing a field length of the ranging information can reduce signaling overheads to some extent, shorten a time period in which the first device receives the ranging information, and reduce a time period in which the second communication frequency band is enabled, to further reduce the operating power consumption of the receiving device and enhance the battery endurance of the device.

With reference to the fifth aspect, in some implementations of the fifth aspect, the first device estimates first carrier frequency offset CFO information of the first terminal device based on the first configuration information, and completes time synchronization with the first terminal device in the first communication frequency band based on the first CFO information. The first device determines, based on the first CFO information, a moment for receiving the first ranging information through the second communication frequency band.

Based on this technical solution, the first device estimates the CFO information between itself and the first terminal device based on the first configuration information, to complete time synchronization with the first terminal device in the first communication frequency band based on the CFO information. Because the first device completes time synchronization with the first terminal device in the first communication frequency band, when the first terminal device sends information to the first device through the second communication frequency band, time synchronization does not need to be performed again. The first device directly determines, based on the CFO information, a moment for enabling the second communication frequency band to receive the first ranging information. This further reduces the operating power consumption of the receiving device and enhances the battery endurance of the device.

With reference to the fifth aspect, in some implementations of the fifth aspect, before the first communication module in the first terminal device sends the first configuration information, time synchronization is completed between the first terminal device, the second terminal device, and the third terminal device.

Based on this technical solution, before sending the first configuration information, the first terminal device completes time synchronization with the second terminal device and the third terminal device, so that all terminal devices that are configured to send the configuration information and the ranging information share a same clock source. In this way, ranging and positioning resolution can be performed more accurately by using the time differences of arrival between the ranging information, to improve ranging and positioning accuracy.

**BRIEF DESCRIPTION OF DRAWINGS**

FIG. 1 is a diagram of an architecture of a ranging and positioning system according to an embodiment of this application;

FIG. 2 is a diagram of an architecture of a TDOA-based uplink ranging and positioning system according to an embodiment of this application;

FIG. 3 is a diagram of ranging based on a hyperbolic positioning method according to an embodiment of this application;

FIG. 4 is a diagram of signal timing arrangement of a TDOA-based downlink ranging and positioning system according to an embodiment of this application;

FIG. 5 is a diagram of a format of a UWB ranging frame according to an embodiment of this application;

FIG. 6 is a detailed diagram of a UWB frame according to an embodiment of this application;

FIG. 7 is a diagram of signal timing arrangement of a ranging and positioning system according to an embodiment of this application;

FIG. 8 is a diagram of communication between devices in a ranging and positioning system according to an embodiment of this application;

FIG. 9 is a block diagram of a communication apparatus 100 according to this application; and

FIG. 10 is a diagram of a structure of a communication apparatus 10 according to this application.

**DESCRIPTION OF EMBODIMENTS**

The following describes technical solutions in this application with reference to accompanying drawings.

The technical solutions in this application may be applied to a wireless personal area network (wireless personal area network, WPAN). Currently, a standard used for the WPAN is the Institute of Electrical and Electronics Engineers (institute of electrical and electronics engineers, IEEE) 802.15 series. The WPAN may be used for communication between digital auxiliary devices in a small range, such as a telephone, a computer, and an auxiliary device. Technologies that support the wireless personal area network include Bluetooth (Bluetooth), Zigbee (Zigbee), ultra-wideband (ultra wideband, UWB), an Infrared Data Association (infrared data association, IrDA) connection technology, home radio frequency (home radio frequency, HomeRF), and the like. From a perspective of network composition, the WPAN is located at a bottom layer of an entire network architecture and is used for a wireless connection between devices in a small range, that is, a point-to-point short-range connection, and may be considered as a short-range wireless communication network. Based on different application scenarios, WPANs are further classified into a high rate (high rate, HR)-WPAN and a low rate (low rate, LR)-WPAN. The HR-WPAN may be used to support various high-rate multimedia applications, including high-quality sound image delivery, multi-megabyte music and image document transmission, and the like. The LR-WPAN may be used for common services in daily life.

In the WPAN, devices may be classified into a full-function device (full-function device, FFD) and a reduced-function device (reduced-function device, RFD) based on communication capabilities of the devices. FFDs can communicate with each other, and an FFD and an RFD can communicate with each other. RFDs cannot directly communicate with each other. An RFD can only communicate with an FFD or forward data externally through one FFD. The FFD associated with the RFD is referred to as a coordinator (coordinator) of the RFD. The RFD is mainly used for a simple control application, for example, a light switch and a passive infrared sensor. A small amount of data is transmitted, and small quantities of transmission resources and communication resources are occupied. Therefore, costs of the RFD are low. The coordinator may also be referred to as a personal area network (personal area network, PAN) coordinator, a central control node, or the like. The PAN coordinator is a main control node of an entire network, and each ad hoc network can have only one PAN coordinator, which has functions of member identity management, link information management, and packet forwarding.

Optionally, a device (for example, a sending device or a receiving device) in embodiments of this application may be a device supporting the 802.15 series, for example, a device supporting a plurality of WPAN standards such as 802.15.4a, 802.15.4z, and a WPAN standard under discussion or a WPAN standard in a subsequent version.

In embodiments of this application, the device may be a communication server, a router, a switch, a bridge, a computer, a mobile phone, a home smart device, a vehicle-mounted communication device, or the like.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specially limited in embodiments of this application, provided that a program that records code of the method provided in embodiments of this application can be run to perform communication according to the method provided in embodiments of this application. For example, the method provided in embodiments of this application may be performed by the FFD or the RFD, or a functional module that is in the FFD or the RFD and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain, and/or carry instructions and/or data.

The technical solutions in this application are further applicable to a wireless local area network system, for example, an internet of things (internet of things, IoT) network or a vehicleto-everything (Vehicle to X, V2X) network. It is clear that embodiments of this application are further applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The foregoing communication systems to which this application is applicable are merely examples for description, and the communication systems to which this application is applicable are not limited thereto. Unified descriptions are provided herein, and are not described below again. In embodiments of this application, the term "wireless communication" may also be referred to as "communication" for short, and the term "communication" may also be described as "data transmission", "information transmission", or "transmission".

Development of science and technology leads to increasingly extensive application of UWB ranging and positioning technologies. UWB is an ultra-wideband communication system, which uses a pulse whose pulse width is at a nanosecond (ns) level or even a picosecond (ps) level as its basic signal. The UWB has a bandwidth of hundreds of megahertz or even up to 1 GHz in a frequency spectrum. For example, a 2 ns pulse signal has a bandwidth of 500 MHz. Therefore, the UWB features a large bandwidth, a high transmission rate, a large system capacity, and the like. Based on these features, the UWB can implement higher ranging and positioning accuracy than an existing wireless positioning technology, and the positioning accuracy is up to a centimeter level. In addition, the UWB has high temporal resolution, so that the UWB has a good anti-multipath capability. The UWB can still implement ranging and positioning in a complex multipath environment, and has become a research hotspot currently.

For ease of understanding of the technical solutions in embodiments of this application, some terms or concepts that are used in embodiments of this application are first briefly described.

1. UWB technology: The UWB technology is a wireless carrier communication technology that uses nanosecond-level non-sine wave narrow pulses to transmit data, and occupies a wide frequency spectrum range. Due to a narrow pulse and extremely low radiation spectral density of the UWB technology, a UWB system has advantages of a strong multipath resolution capability, low power consumption, high confidentiality, and the like, and is conducive to coexistence with another system, thereby improving spectral utilization and a system capacity.

2. Time difference of arrival (Time Difference of Arrival, TDOA): TDOA is a positioning technology used to measure time differences of arrival of signals. It determines a location of a signal source based on a time difference of receiving a same signal by a plurality of receivers, and may determine a location of a mobile device by measuring a time difference in signal arrival at different base stations or receivers. The TDOA positioning technology is applicable to fields such as wireless communication, radars, acoustics, and positioning systems.

3. UWB ranging and/or positioning: Development of indoor positioning technologies leads to increasingly extensive application of UWB ranging and/or positioning technologies. UWB uses a pulse whose pulse width is at a nanosecond level or even a picosecond level as its basic signal. The UWB features a high transmission rate, a large system capacity, a large spectral bandwidth, an extremely low power spectral density, and the like, and can coexist with an existing system of short-range communication and the like. Due to these features, the UWB has high temporal resolution, a strong anti-multipath capability, and high ranging and positioning accuracy at a centimeter level. It has become a research hotspot to implement ranging and positioning in a complex multipath environment.

4. TDOA-based ranging and positioning system: The system is applicable to a realtime locating system (real time location system, RTLS) that needs a large capacity, such as in shopping malls, factories, and workshops. In the TDOA-based positioning system, terminal devices at constant or known locations are needed. With the locations of these terminal devices as a reference, distances between a terminal device at a to-be-measured location and the terminal devices at the known locations are measured and calculated to obtain the specific location of the to-be-measured terminal device.

In some embodiments, the terminal device at the known location is also referred to as an anchor, a base station, or the like; and the terminal device at the to-be-measured location is also referred to as a tag (tag), a positioned device, or the like. These are merely names, and do not constitute any limitation on the protection scope of this application.

The device in this application may be a wireless communication chip, a wireless sensor, or a wireless communication terminal, for example, a user terminal, a user apparatus, an access apparatus, a subscriber station, a subscriber unit, a mobile station, a user agent, and user equipment that support a Wi-Fi communication function. The user terminal may include various handheld devices, vehicle-mounted devices, wearable devices, internet of things (internet of things, IoT) devices, or computing devices that have a wireless communication function, or another processing device connected to a wireless modem, user devices (user equipment, UE) of various forms, a mobile station (mobile station, MS), a terminal (terminal), a terminal device (terminal equipment), a portable communication device, a handheld device, a portable computing device, an entertainment device, a game device or system, a global positioning system device, or any other appropriate device configured to perform network communication via a wireless medium. In addition, the device may support the 802.15.4ab standard or a next-generation standard of 802.15.4ab. The device may further support a plurality of standards, such as 802.15.4a, 802.15.4-2011, 802.15.4-2015, and 802.15.4z. The device may further support a plurality of wireless local area network (wireless local area network, WLAN) standards of the 802.11 family, for example, 802.11ax, 802.11ac, 802.11n, 802.11g, 802.11b, 802.11a, and a next generation of 802.11be.

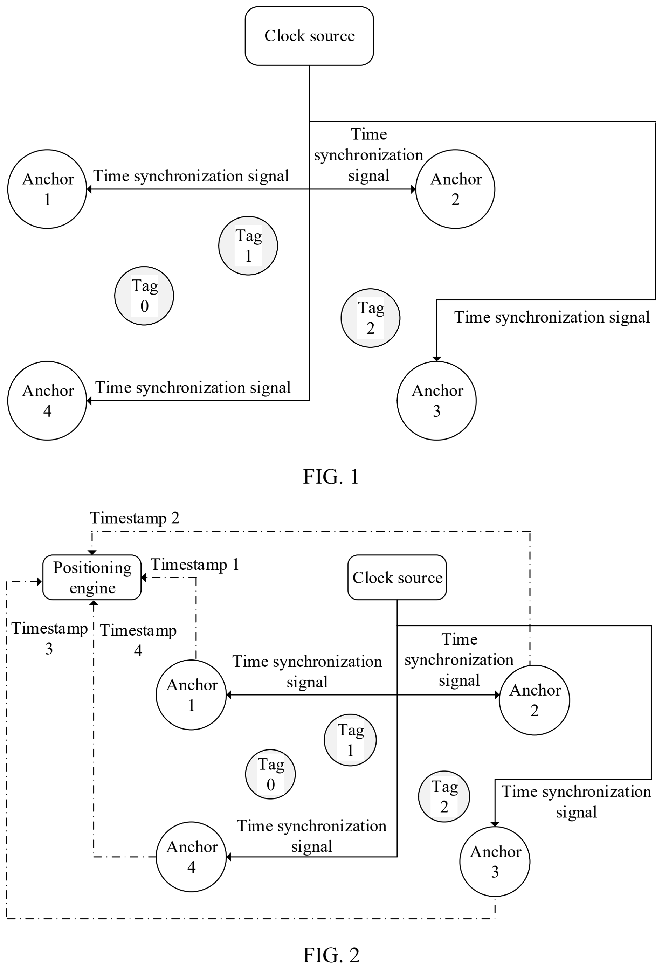

For ease of understanding, a TDOA-based ranging and positioning system to which the foregoing ranging technology is applied is briefly described with reference to FIG. 1.

FIG. 1 is a diagram of an architecture of a ranging and positioning system according to an embodiment of this application. As shown in FIG. 1, anchors at known locations and tags at to-be-measured locations are included. These anchors need to be in a same time system, that is, time synchronization between the anchors is implemented through a clock source. A TDOA-based ranging and positioning system has two modes: uplink and downlink. In uplink mode, for an uplink TDOA, a tag broadcasts a UWB signal, and anchors receive the signal. A location of the tag is calculated based on locations of the anchors and a time difference of arrival of the signal received by different anchors. For a downlink TDOA, anchors sequentially broadcast UWB signals based on a time sequence, and a tag receives the signals. A tag in a TDOA-based downlink ranging and positioning system is always in a receiving state and constantly searches for UWB signals broadcast by anchors, and calculates a location of the tag based on locations of the anchors and a time difference of arrival of the received signals broadcast by different anchors.

In the TDOA-based ranging and positioning system, at least two anchors at known locations complete ranging and positioning for a tag. When only two anchors exist in the TDOA-based ranging and positioning system, the system can perform ranging and positioning on a tag on one side of a line connecting the two anchors. When three anchors exist in the TDOA-based ranging and positioning system, the system can perform ranging and positioning on a tag at any location within a communication range of the anchors. More anchors in the TDOA-based ranging and positioning system lead to a larger ranging and positioning range of the system and higher accuracy.

It should be understood that within a detection range of the anchors, a quantity of tags that can be detected is not specially limited in this application.

5. TDOA-based uplink ranging and positioning: For ease of understanding, the following briefly describes a TDOA-based uplink UWB ranging method with reference to FIG. 2.

FIG. 2 is a diagram of an architecture of a TDOA-based uplink ranging and positioning system according to an embodiment of this application. In the figure, a clock source is configured to provide time synchronization between anchors, and a positioning engine is configured to receive timestamps sent by the anchors and resolve locations of tags. A specific ranging and positioning procedure is as follows:

Step 1: Perform time synchronization between the anchors. The clock source periodically sends a time synchronization signal to anchors 1, 2, 3, and 4. In a possible manner, first, the time synchronization signal is sent to the anchors 1, 2, 3, and 4 to clear clocks of all anchors. Then, a time synchronization signal is sent to the anchors 1, 2, 3, and 4 every second, that is, the anchors adjust their own clocks every second, so that time systems of all anchors use the clock source as a reference, to complete time synchronization.

Step 2: Prevent uplink signal collision. Tags 0, 1, and 2 are in a receiving state. During this period, carrier sense multiple access with collision avoidance (carrier sense multiple access with collision avoidance, CSMA/CA) detection is performed to prevent signal collision.

Step 3: The tag broadcasts a signal to the anchors. The tags 0, 1, and 2 all have a capability of broadcasting UWB signals. The tag 0 is used as an example for description herein. The tag 0 sends a UWB signal to the anchors 1, 2, 3, and 4. The UWB signal carries basic information such as a device address.

Step 4: The anchors receive the signal and send timestamps. The anchors 1, 2, 3, and 4 are always in the receiving state. After receiving the UWB signal from the tag 0, the anchors respectively record and send reception timestamps 1, 2, 3, and 4 to the positioning engine.

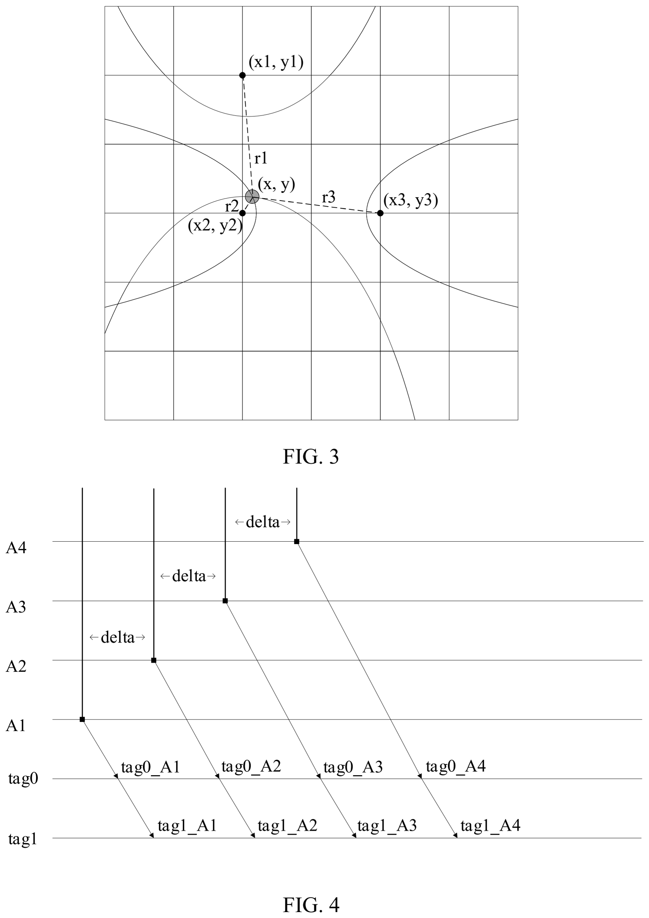

Step 5: Perform ranging and positioning resolution. After receiving the timestamps sent by the anchors, the positioning engine obtains a distance between the tag and each anchor through conversion based on a time difference, and then performs positioning on the tag based on a hyperbolic positioning method. For ease of understanding, the following describes the hyperbolic positioning method with reference to FIG. 3.

FIG. 3 is a diagram of ranging based on a hyperbolic positioning method according to an embodiment of this application. In the figure, an example in which distances between three anchors and one tag are resolved is used for description. In the figure, coordinates of the three anchors at known locations are (x1, y1), (x2, y2), and (x3, y3), and coordinates of the tag at a to-be-measured location are (x, y). The distances between the tag and the three anchors are r1, r2, and r3. Values of r1, r2, and r3 are resolved. The specific coordinates of the tag may be obtained with reference to the coordinates of the three anchors. Specific resolving formulas include:

$$|r1-r2| = \sqrt{(x1-x)^2 + (y1-y)^2} - \sqrt{(x2-x)^2 + (y2-y)^2} \qquad (1)$$

$$|r2-r3| = \sqrt{(x2-x)^2 + (y2-y)^2} - \sqrt{(x3-x)^2 + (y3-y)^2} \qquad (2)$$

$|r^1 - r^2|$ represents a difference between the distances from a signal broadcast by the tag at (x, y) to the anchor at (x1, y1) and the anchor at (x2, y2). The distance difference may be calculated by multiplying a speed of light by a time difference between timestamps recorded by the two anchors.

In this way, the positioning engine resolves the location of the tag and obtains ranging and positioning information of the tag.

6. TDOA-based downlink ranging and positioning: In a downlink ranging and positioning system, anchors send UWB signals to a tag. The tag records reception timestamps and performs resolution based on time differences.

It should be understood that in downlink mode, after recording the reception timestamps, the tag may send timestamp information to a positioning engine for location resolution. Alternatively, a resolution module may be integrated into the tag and directly perform distance resolution based on the recorded timestamp information. This is not specifically limited in this application. In this application, an example in which the resolution module is integrated into the tag is used to describe TDOA-based downlink ranging and positioning.

For ease of understanding, the following briefly describes a TDOA-based downlink UWB ranging method with reference to FIG. 1 and FIG. 4. In FIG. 1, a tag is always in a receiving state and constantly searches for UWB signals broadcast by anchors, and calculates a location of the tag based on locations of the anchors and a time difference of arrival of the received signals broadcast by different anchors. A specific ranging and positioning procedure is as follows:

Step 1: Perform time synchronization between the anchors. A clock source performs time synchronization on anchors 1, 2, 3, and 4, so that time systems of all anchors use the clock source as a reference. For a specific synchronization step, refer to the time synchronization step in TDOA-based uplink ranging and positioning. Details are not described herein again in this application.

Step 2: The anchors broadcast signals to the tag. The anchors 1, 2, 3, and 4 sequentially broadcast UWB signals to the tag based on a time sequence. The UWB signals carry basic information such as device addresses. For ease of understanding, the following describes how the anchors send the signals to the tags with reference to FIG. 4.

FIG. 4 is a diagram of signal timing arrangement of a TDOA-based downlink ranging and positioning system according to an embodiment of this application. In the figure, A1, A2, A3, and A4 respectively represent the anchors 1, 2, 3, and 4. In the TDOA-based downlink ranging and positioning system, a quantity of tags at to-be-measured locations is not specifically limited. Ranging and positioning may be performed on a plurality of tags. In FIG. 4, tags 0 and 1 are used as an example for description.

The anchors 1, 2, 3, and 4 sequentially broadcast the UWB signals to the tags 0 and 1 at an interval of delta duration. The delta duration may be adjusted based on an actual situation, and is usually at a microsecond to millisecond level.

Step 3: The tag receives the signals and records timestamps. The tags 0 and 1 are always in the receiving state, and receive the UWB signals sent by the anchors 1, 2, 3, and 4. The tag 0 records a reception timestamp tag0_A1 when receiving the UWB signal sent by the anchor 1 and records a reception timestamp tag0_A2 when receiving the UWB signal sent by the anchor 2. By analogy, the tag records a reception timestamp tag*_A* when receiving the UWB signal sent by the anchor.

Step 4: Perform ranging and positioning resolution. A resolution module is disposed in the tag. The resolution module obtains a difference between distances from the tag to the anchors based on the recorded timestamps, and then performs ranging and positioning on the tag based on a hyperbolic positioning method. For details of the hyperbolic positioning method and calculation, refer to the resolution step in TDOA-based uplink ranging and positioning. Details are not described herein again in this application.

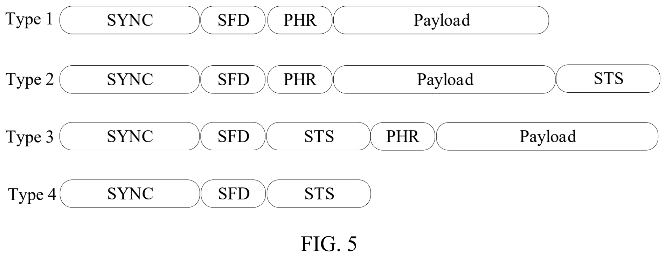

Specifically, a UWB technology does not need to use a carrier in a conventional communication standard, but transmits data by sending and receiving an extremely narrow pulse at a nanosecond or lower level. Therefore, synchronization between a receiver device and a transmitter device by using the UWB technology is crucial in the UWB technology. The synchronization between the receiver device and the transmitter device may be understood as that a physical layer protocol data unit (physical layer protocol data unit, PPDU) is sent in a form of a pulse signal, and a receiver determines, from a plurality of received pulse signals, a specific pulse signal from which the PPDU to be received by the receiver starts. Currently, the synchronization between the receiver device and the transmitter device is mainly implemented via a synchronization header (synchronization header, SHR) of the PPDU. Specifically, the receiver may perform correlation detection on the synchronization header, to determine, from the plurality of received pulse signals, a specific pulse signal from which the PPDU to be received by the receiver starts. For example, a form of a ranging frame in a UWB signal may be one of four types shown in FIG. 5.

FIG. 5 is a diagram of a format of a UWB ranging frame according to an embodiment of this application. A ranging frame shown in a type 1 includes a synchronization header (synchronization header, SHR), a physical header (physical header, PHR), and a payload (payload). The SHR includes a synchronization (synchronization, SYNC) field and a start frame delimiter (start frame delimiter, SFD) field. Based on the type 1, a scrambled timestamp sequence (scrambled timestamp sequence, STS) may be further added in a ranging process to enhance ranging security. A type 2 and a type 3 each include an SHR, a PHR, a payload, and an STS. For a specific composition sequence, refer to FIG. 5. A type 4 includes an SHR and an STS.

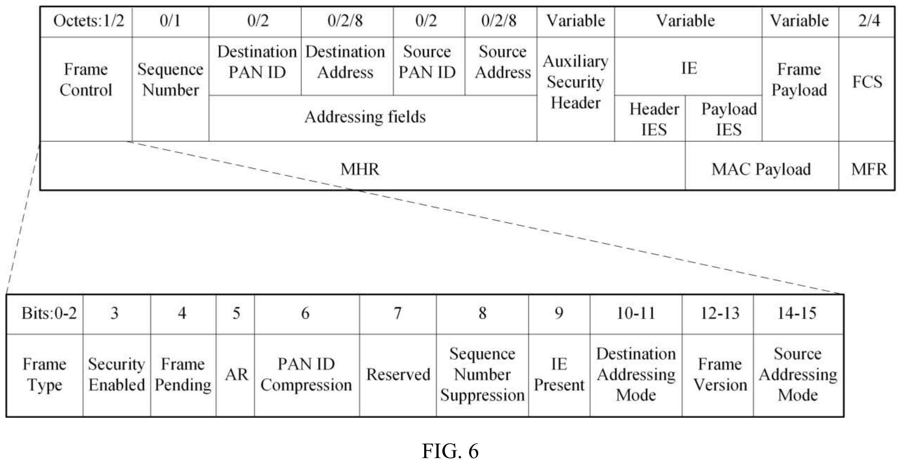

FIG. 6 is a detailed diagram of a UWB frame, that is, a detailed composition of the payload (payload) in FIG. 5. The UWB frame includes three parts: a media access control header (Media Access Control Header, MHR), a media access control payload (MAC payload), and a media access control footer (MAC Footer, MFR). The MHR is used to control and manage information about a media access control (Media Access Control, MAC) layer. The MHR determines a specific field structure and bit allocation based on a specification of a UWB protocol. The MAC payload is actual data carried in a MAC frame, and may be transmitted application data, such as a file, audio, or a video. The MFR contains footer information of the MAC frame, and usually includes fields used for checking, error detection, or cryptographic integrity verification. Specific content and usage of the MFR vary based on a UWB protocol and an application requirement.

The MHR includes frame control (Frame Control), a sequence number (Sequence Number), a destination address (Destination Address), a source address (Source Address), and the like. The frame control includes a frame type (Frame Type). Different frame types may identify different fields. The frame control usually uses three bits (bit2, bit1, and bit0) as flag bits to determine the frame type. Table 1 shows correspondences of some common frame type identifiers.

Table 1

| Frame type value (bit2, bit1, and bit0) | Description |
|---|---|
| 000 | Beacon (Beacon) frame |
| 001 | Data frame |
| 010 | Acknowledge character (Acknowledge character, ACK) frame |

In UWB-based TDOA ranging and positioning solutions shown in FIG. 1 and FIG. 2, a UWB signal receiver needs to remain in an enabled state to continuously receive a UWB signal. Due to a large bandwidth of the UWB signal and high power consumption of a chip, a receiving device has low battery endurance. In addition, a limited transmit power of the UWB signal results in a limited transmission distance. Consequently, a ranging and positioning range is also limited.

In view of this, this application provides a ranging and positioning method, to reduce operating power consumption of a receiving device, enhance battery endurance of the device, and extend a ranging range.

It should be understood that in a TDOA-based positioning system, ranging can be completed in either uplink or downlink mode. This is not specifically limited in this application. To clearly describe this solution, TDOA-based downlink ranging and positioning is used as an example herein for description, and does not constitute any limitation on the protection scope of this application.

It should be understood that the architecture of the TDOA-based positioning system shown in FIG. 1 is used as an example to describe embodiments of this application, and does not constitute any limitation on the protection scope of this application.

The anchors 1, 2, and 3 and the tags 0 and 1 shown in FIG. 1 are used as an example. The ranging and positioning method provided in this application specifically includes the following steps.

Step 1: Perform time synchronization between the anchors. A clock source performs time synchronization on the anchors 1, 2, and 3, so that time systems of all anchors use the clock source as a reference. For a specific synchronization step, refer to the time synchronization step in TDOA-based uplink ranging and positioning. Details are not described herein again in this application.

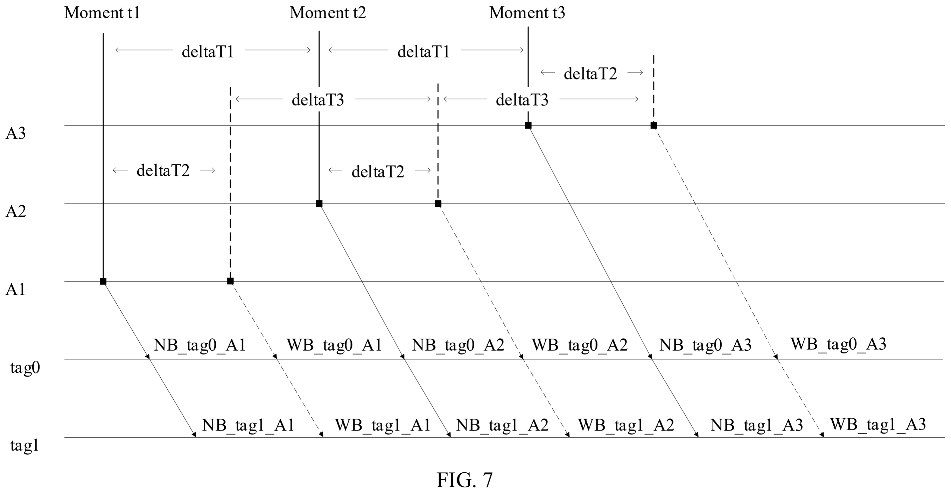

Step 2: The anchor 1 broadcasts signals. The anchor 1 sends a narrowband frame at a moment t1. The narrowband frame includes device information of the anchor, and carries time setting information such as a synchronization signal, deltaT1, deltaT2, and deltaT3. The anchor 1 sends a wideband ranging frame at a moment (t1 + deltaT2). The wideband ranging frame does not need to carry the device information and payload again. This can effectively reduce a working time of a wideband. For ease of understanding, the following describes how the anchors send the signals to the tags with reference to FIG. 7.

FIG. 7 is a diagram of signal timing arrangement of a ranging and positioning system according to an embodiment of this application. In the figure, A1, A2, and A3 respectively represent the anchors 1, 2, and 3. In the ranging and positioning method provided in this application, a quantity of tags is not specifically limited. Ranging and positioning may be performed on a plurality of tags.

Step 3: The tags receive the signals from the anchor 1. A narrowband communication system of the tag 0 is always in an enabled state, whereas a wideband communication system of the tag 0 is in a disabled state. After receiving the narrowband frame sent by A1, the tag 0 records a timestamp NB_tag0_A1. After receiving the narrowband frame, the tag 0 completes time synchronization with the anchor 1 based on the device information, the synchronization signal, and the like carried in the narrowband frame. The tag 0 estimates carrier frequency offset (carrier frequency offset, CFO) information based on the narrowband frame. The CFO information may be a positive value or a negative value. The tag 0 calculates, based on the CFO information, a moment for enabling the wideband communication system, to enable the wideband communication system to receive the wideband ranging frame sent by A1. The moment at which the tag 0 enables the wideband communication system includes:

$$\mathrm{NB\_tag0\_A1} + \mathrm{deltaT2} \cdot (1 - \mathrm{CFO}_{\mathrm{tag0\_A1}}) \qquad (3)$$

$\mathrm{CFO}_{\mathrm{tag0\,A1}}$ represents a CFO that is of A1 relative to the tag 0 and that is predicted at a moment at which the tag 0 records the timestamp NB_tag0_A1.

After receiving the wideband ranging frame, the tag 0 records a timestamp WB_tag0_A1. Because the narrowband communication system and the wideband communication system share the same clock source, a coarse synchronization step in the wideband can be omitted after time synchronization in a narrowband is completed with the anchor. This can reduce power consumption of the tag for searching for a wideband signal. A manner in which the tag 1 receives the narrowband frame and the wideband ranging frame that are sent by the anchor 1 is consistent with that for the tag 0. Details are not described herein again in this application.

Step 4: The anchor 2 broadcasts signals. The anchor 2 sends a narrowband frame at a moment t2. Due to system synchronization between the anchors, which share the same clock source, t2 = t1 + deltaT1. Similar to the anchor 1, the narrowband frame includes device information of the anchor, and carries time setting information such as a synchronization signal, deltaT1, deltaT2, and deltaT3. The anchor 2 broadcasts a wideband ranging frame at a moment (t2 + deltaT2). The wideband ranging frame does not need to carry the device information and payload again.

Step 5: The tags receive the signals from the anchor 2. The tag 0 enables receiving based on a moment (NB_tag0_A1 + deltaT2 - delta), and performs coarse search for a narrowband signal sent by A2.

It should be understood that a value of delta herein is set based on an actual system situation to ensure that the tag 0 can enable receiving in advance and receive the narrowband signal sent by A2. A specific value of delta is related to an electrical characteristic of a device, signal propagation, and the like. This is not specifically limited herein in this application.

After receiving the narrowband signal sent by A2, the tag 0 records a timestamp NB_tag0_A2 and estimates a CFO between itself and A2. A moment at which the tag 0 enables the wideband communication system to receive the wideband ranging frame from A2 includes:

$$NB\_tag0\_A2 + deltaT2 \cdot (1 - CFO_{tag0\_A2}) \qquad (4)$$

$CFO_{tag0\,A2}$ represents a CFO that is of A2 relative to the tag 0 and that is predicted at a moment at which the tag 0 records the timestamp NB_tag0_A2.

After receiving the wideband ranging frame from A2, the tag 0 records a timestamp WB_tag0_A2. A manner in which the tag 1 receives the narrowband frame and the wideband ranging frame that are sent by the anchor 2 is consistent with that for the tag 0. Details are not described herein again in this application.

Step 6: The anchor 3 broadcasts signals. The anchor 3 sends a narrowband frame at a moment t3. For a specific sending process, refer to the sending process of the anchor 2 in step 4. Details are not described herein again in this application.

Step 7: The tags receive the signals from the anchor 3. The tags 0 and 1 receive the signals sent by A3. For a specific receiving process, refer to the receiving process of the tag in step 3 and step 5. Details are not described herein again in this application.

Step 8: Perform ranging and positioning resolution. A resolution module is disposed in the tag. The resolution module obtains a difference between distances from the tag to the anchors based on the recorded timestamps, and then performs ranging and positioning on the tag based on a hyperbolic positioning method. For details of the hyperbolic positioning method and calculation, refer to the resolution step in TDOA-based uplink ranging and positioning. Details are not described herein again in this application.

Time differences between arrivals from the anchors A1, A2, and A3 to the tag 0 include:

$$\Delta timeA1A2\_tag0 = WB\_tag0\_A2 - WB\_tag0\_A1 - deltaT3 \cdot (1 - CFO_{tag0\_A2}) \qquad (5)$$

$$\Delta timeA2A3\_tag0 = WB\_tag0\_A3 - WB\_tag0\_A2 - deltaT3 \cdot (1 - CFO_{tag0\_A3}) \qquad (6)$$

ΔtimeA1A2_tag0 represents a time difference between the arrivals from A1 and A2 to the tag 0. ΔtimeA2A3_tag0 represents a time difference between the arrivals from A2 and A3 to the tag 0. A difference between distances from the tag 0 to A1 and A2 and a difference between distances from the tag 0 to A2 and A3 may be calculated based on the time differences. The distances from the tag 0 to A1, A2, and A3 may be resolved based on the distance differences with reference to the hyperbolic positioning method described in FIG. 3, to resolve a location of the tag 0. For a method for resolving a location of the tag 1, refer to the resolving method for the tag 0. Details are not described herein again in this application.

It should be understood that in some embodiments, the wideband ranging frame is also referred to as a wideband frame, a wideband signal, a wideband ranging signal, or the like. It should be understood that these are merely names and describe a same signal. This is not specifically limited in this application.

It should be understood that in some embodiments, the narrowband frame is also referred to as a narrowband signal, a narrowband communication and synchronization frame, a narrowband communication and synchronization signal, or the like. It should be understood that these are merely names and describe a same signal. This is not specifically limited in this application.

The foregoing describes in detail the ranging and positioning method provided in this application. The following

# EP 4 708 978 A1

describes communication apparatuses provided in this application.

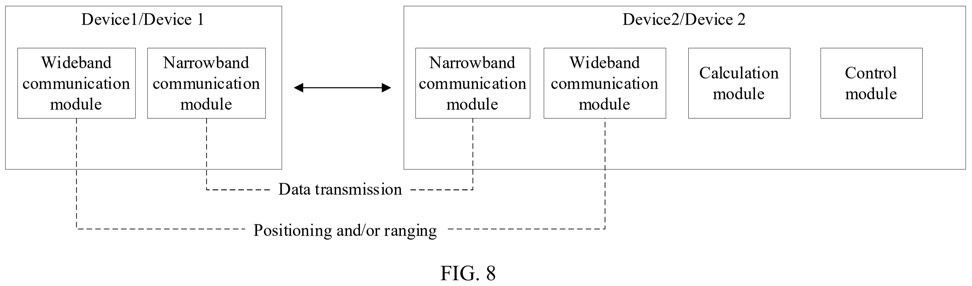

FIG. 8 is a diagram of communication between devices in a ranging and positioning system according to an embodiment of this application. The ranging and positioning system includes at least two transmitting devices, namely, anchors. The ranging and positioning system includes at least one receiving device, namely, a tag. Communication between one anchor and one tag is used as an example. A device 1 and a device 2 in the figure may be respectively an anchor and a tag in embodiments of this application. Each device includes at least a wideband communication module and a narrowband communication module. Positioning and/or ranging may be performed between the wideband communication modules in the device 1 and the device 2. Data transmission may be performed between the narrowband communication modules in the device 1 and the device 2 over a radio link. As a receiving module, the device 2 may further include a control module and a calculation module. The control module is configured to perform time synchronization with the anchor based on a received narrowband signal, and is further configured to determine a moment for receiving a wideband signal. The calculation module is configured to resolve a location of the tag based on a time difference of arrival between received narrowband signals. The control module is further configured to control the narrowband communication module and the wideband communication module to be enabled and/or disabled.

In this application, the wideband communication module may be understood as an apparatus, a chip, a system, or the like that implements a wideband wireless communication technology. Correspondingly, the narrowband communication module may be understood as an apparatus, a chip, a system, or the like that implements a narrowband communication technology (such as Wi-Fi, Bluetooth, or Zigbee (a Zigbee protocol)). In one device (device), a wideband communication module and a narrowband communication module may be different apparatuses or chips. Certainly, the wideband communication module and the narrowband communication module may alternatively be integrated into one apparatus or chip. Embodiments of this application do not limit implementations of the wideband communication module and the narrowband communication module in the device. A wideband communication technology can enable a communication apparatus to have a high data throughput and enable apparatus positioning to have high accuracy. Narrowband communication provides a relatively accurate moment for enabling a wideband communication system, so that the wideband communication system does not need coarse synchronization and directly performs fine synchronization. This can further reduce power consumption and enhance battery endurance of the receiving device.

It should be understood that both the device 1 and the device 2 may represent an anchor or a tag. Data transmission is performed between the anchor and the tag through a narrowband communication system, and positioning and/or ranging are/is performed through a wideband communication system. The device 1 and the device 2 may have a built-in resolution module to perform positioning and/or ranging resolution, or may send timestamps to an independent calculation module to perform positioning and/or ranging resolution. This is not specifically limited in this application.

In this application, a wideband communication signal includes a signal whose bandwidth is greater than or equal to 499.2 MHz.

It should be understood that the wideband communication signal sent by the wideband communication module includes a UWB signal, and further includes another signal whose bandwidth is greater than or equal to 499.2 MHz.

In the ranging and positioning system in this application, a receiving system of the receiving device does not need to always remain in an enabled state. After a narrowband signal sent by a sending device 1 at a moment t1 is received, a moment at which the sending device 1 sends a wideband signal may be predicted based on a synchronization signal and time setting information that are carried in the narrowband signal. A wideband receiving system is enabled before the predicted moment to receive the wideband signal. A moment at which a sending device 2, a sending device 3, or the like sends a narrowband signal or a wideband signal may be further predicted based on the synchronization signal and the time setting information that are carried in the narrowband signal sent by the sending device 1, and a corresponding receiving system is enabled before the predicted moment. This can reduce power consumption of the receiving device and enhance battery endurance of the receiving device.

It should be understood that in the ranging and positioning method provided in this application, a sending device includes an anchor, a tag, or the like, and a receiving device includes a tag, an anchor, or the like. Whether the sending device and the receiving device are specifically an anchor or a tag depends on whether TDOA-based uplink or downlink ranging is used. In uplink ranging, the sending device is a tag, and the receiving device is an anchor. In downlink ranging, the sending device is an anchor, and the receiving device is a tag.

In the ranging and positioning method provided in this application, a quantity of anchors should be greater than or equal to 2. When only two anchors at known locations exist in the ranging and positioning system, using the hyperbolic positioning method to resolve location coordinates of a tag yields two tag locations, which are on two sides of a line connecting the two anchors and symmetrical along the connection line. In a non-limiting embodiment, if only two anchors exist, the two anchors are usually installed on a same side of a ranging edge, and ranging and positioning are performed on a tag on one side. For example, if two anchors are fastened on a same inner wall of a building, ranging and positioning can be performed on a location of a tag in the building.

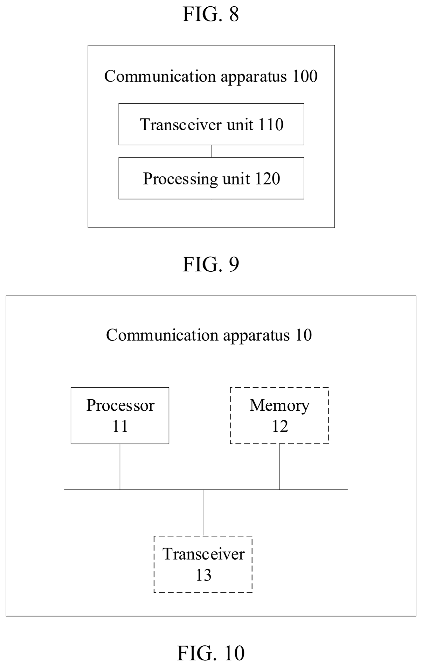

The following describes in detail communication apparatuses provided in embodiments of this application with reference to FIG. 9 and FIG. 10. It should be understood that descriptions of apparatus embodiments correspond to the descriptions of the method embodiments. Therefore, for content that is not described in detail, refer to the foregoing method embodiments. For brevity, details of a part of content are not described herein again.

In embodiments of this application, the anchor or the tag may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in embodiments of this application, division into the modules is an example, and is merely logical function division. During actual implementation, another division manner may be used. An example in which each functional module is obtained through division based on each corresponding function is used below for description.

FIG. 9 is a block diagram of a communication apparatus according to an embodiment of this application. As shown in FIG. 9, the apparatus 100 may include a transceiver unit 110 and a processing unit 120. The transceiver unit 110 may communicate with the outside. The processing unit 120 is configured to process data. The transceiver unit 110 may also be referred to as a communication interface or a communication unit.

Optionally, the apparatus 100 may further include a storage unit. The storage unit may be configured to store instructions and/or data. The processing unit 120 may read the instructions and/or data in the storage unit, to enable the apparatus to implement the foregoing method embodiments.

The apparatus 100 may be configured to perform actions performed by a transceiver device (for example, the tag and the anchor) in the foregoing method embodiments. In this case, the apparatus 100 may be the transceiver device or a component that can be configured in the transceiver device. The transceiver unit 110 is configured to perform transceiving-related operations of the transceiver device in the foregoing method embodiments. The processing unit 120 is configured to perform processing-related operations of the transceiver device in the foregoing method embodiments.

Optionally, the transceiver unit 110 in the apparatus 100 may perform communication in two frequency bands with different bandwidths. The transceiver unit 110 may receive and send information in a narrowband frequency band, and may also receive and send information in a wideband frequency band. The processing unit 120 is configured to control the transceiver unit 110 to send information in different frequency bands, and is further configured to process information received by the transceiver unit 110 in different frequency bands.

In a design, the apparatus 100 is configured to perform actions performed by the anchor in the foregoing method embodiments, and the transceiver unit 110 includes the wideband communication module and the narrowband communication module in the embodiments.

In another design, the apparatus 100 is configured to perform actions performed by the tag in the foregoing method embodiments, and the transceiver unit 110 includes the wideband communication module and the narrowband communication module in the embodiments.

It should be understood that a specific process in which the units perform the foregoing corresponding steps is described in detail in the foregoing method embodiments, and for brevity, details are not described herein again.

The processing unit 120 in the foregoing embodiments may be implemented by at least one processor or a processor-related circuit. The transceiver unit 110 may be implemented by a transceiver or a transceiver-related circuit. The storage unit may be implemented by at least one memory.

As shown in FIG. 10, an embodiment of this application further provides an apparatus 10. The apparatus 10 includes a processor 11, and may further include one or more memories 12. The processor 11 is coupled to the memory 12. The memory 12 is configured to store a computer program or instructions and/or data. The processor 11 is configured to execute the computer program or the instructions and/or the data stored in the memory 12, so that the method in the foregoing method embodiments is performed. Optionally, the apparatus 10 includes one or more processors 11.

Optionally, the memory 12 may be integrated with the processor 11, or separately disposed.

Optionally, as shown in FIG. 10, the apparatus 10 may further include a transceiver 13. The transceiver 13 is configured to receive and/or send a signal. For example, the processor 11 is configured to control the transceiver 13 to receive and/or send the signal.

In a solution, the apparatus 10 is configured to implement operations performed by a transceiver device (for example, the anchor and the tag) in the foregoing method embodiments.

In addition, this application further provides a computer-readable storage medium. The computer-readable storage medium stores computer instructions. When the computer instructions are run on a computer, the method in the method embodiments of this application is performed.

This application further provides a computer program product. The computer program product includes computer program code or instructions. When the computer program code or the instructions are run on a computer, the method in the method embodiments of this application is performed.

In addition, this application further provides a chip. The chip includes a processor. A memory configured to store a computer program is disposed independent of the chip. The processor is configured to execute the computer program stored in the memory, so that the method in the method embodiments of this application is performed.

Further, the chip may include a communication interface. The communication interface may be an input/output interface, an interface circuit, or the like. Further, the chip may include the memory.

In addition, this application further provides a communication system, including a terminal device in embodiments of this application.

It should be understood that the processor in embodiments of this application may be an integrated circuit chip, and has a signal processing capability. In an implementation process, steps in the foregoing method embodiments may be performed by an integrated logic circuit of hardware in the processor or by using instructions in a form of software. The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or a transistor logic device, a discrete hardware component, or the like. The general-purpose processor may be a microprocessor, or the processor may be any conventional processor or the like. The steps of the method disclosed in embodiments of this application may be directly presented as being performed and completed by a hardware encoding processor, or performed and completed by a combination of hardware in the encoding processor and a software module. The software module may be located in a mature storage medium in the art, such as a random access memory, a flash memory, a read-only memory, a programmable read-only memory, an electrically erasable programmable memory, or a register. The storage medium is located in a memory. The processor reads information in the memory, and completes the steps of the foregoing method in combination with the hardware in the processor.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described in this specification is intended to include, but not limited to, these memories and any memory of another appropriate type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

If implemented in a form of a software functional unit and sold or used as a standalone product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes instructions for enabling a computer device (which may be a personal computer, a server, a network device, or the like) to perform all or some of the steps in the method described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A ranging and positioning method, comprising:

   receiving, by a first device, first configuration information, second configuration information, and third configuration information through a first communication frequency band, and receiving first ranging information, second ranging information, and third ranging information through a second communication frequency band, wherein a bandwidth used in the second communication frequency band is greater than a bandwidth used in the first communication frequency band;
   after completing time synchronization with a first terminal device in the first communication frequency band based on the first configuration information, determining, by the first device, a moment at which the first ranging information arrives, and receiving the first ranging information; and
   determining a location of the first device based on time differences of arrival between the first ranging information, the second ranging information, and the third ranging information.

2. The method according to claim 1, comprising:
   after determining the moment at which the first ranging information arrives, enabling, by the first device, the second communication frequency band to receive the first ranging information, and disabling the second communication frequency band after receiving the first ranging information.

3. The method according to claim 1 or 2, comprising:
   determining, by the first device based on the first configuration information, a moment at which the second ranging information arrives and a moment at which the third ranging information arrives.

4. The method according to any one of claims 1 to 3, comprising:
   after receiving the first configuration information, disabling, by the first device, the first communication frequency band, determining, based on the first configuration information, a moment at which the second configuration information arrives, and enabling the first communication frequency band again to receive the second configuration information.

5. The method according to any one of claims 1 to 4, wherein

   the first configuration information comprises device information of the first terminal device, a device synchronization signal, time setting information, and a data field; and
   the first ranging information comprises a ranging frame, and does not comprise the data field.

6. The method according to any one of claims 1 to 5, wherein

   estimating, by the first device, first carrier frequency offset CFO information of the first terminal device based on the first configuration information, and completing time synchronization with the first terminal device in the first communication frequency band based on the first CFO information; and
   determining, by the first device based on the first CFO information, a moment for receiving the first ranging information through the second communication frequency band.

7. The method according to any one of claims 1 to 6, comprising:
   before the first terminal device sends the first configuration information, completing, by the first terminal device, time synchronization with another terminal device that sends configuration information.

8. A ranging and positioning system, comprising:

sending, by a first terminal device, first configuration information through a first communication frequency band, and sending first ranging information through a second communication frequency band;

receiving, by a first device, the first configuration information, completing time synchronization with the first terminal device in the first communication frequency band based on the first configuration information, determining a moment at which the first ranging information arrives, and receiving the first ranging information, wherein a bandwidth used in the second communication frequency band is greater than a bandwidth used in the first communication frequency band;

sending, by a second terminal device, second configuration information through the first communication frequency band, and sending second ranging information through the second communication frequency band;

receiving, by the first device, the second configuration information, completing time synchronization with the second terminal device in the first communication frequency band based on the second configuration information, determining a moment at which the second ranging information arrives, and receiving the second ranging information;

sending, by a third terminal device, third configuration information through the first communication frequency band, and sending third ranging information through the second communication frequency band;

receiving, by the first device, the third configuration information, completing time synchronization with the third terminal device in the first communication frequency band based on the third configuration information, determining a moment at which the third ranging information arrives, and receiving the third ranging information; and

determining a location of the first device based on time differences of arrival between the first ranging information, the second ranging information, and the third ranging information.

9. The system according to claim 8, comprising:
after determining the moment at which the first ranging information arrives, enabling, by the first device, the second communication frequency band to receive the first ranging information, and disabling the second communication frequency band after receiving the first ranging information.

10. The system according to claim 8 or 9, comprising:
determining, by the first device based on the first configuration information, the moment at which the second ranging information arrives and the moment at which the third ranging information arrives.

11. The system according to any one of claims 8 to 10, comprising:
after receiving the first configuration information, disabling, by the first device, the first communication frequency band, determining, based on the first configuration information, a moment at which the second configuration information arrives, and enabling the first communication frequency band to receive the second configuration information.

12. The system according to any one of claims 8 to 11, wherein

the first configuration information comprises device information of the first terminal device, a device synchronization signal, time setting information, and a data field; and
the first ranging information comprises a ranging frame, and does not comprise the data field.

13. The system according to any one of claims 8 to 12, wherein

estimating, by the first device, first carrier frequency offset CFO information of the first terminal device based on the first configuration information, and completing time synchronization with the first terminal device in the first communication frequency band based on the first CFO information; and
determining, by the first device based on the first CFO information, a moment for receiving the first ranging information through the second communication frequency band.

14. The system according to any one of claims 8 to 13, comprising:
before the first terminal device sends the first configuration information, completing time synchronization between the first terminal device, the second terminal device, and the third terminal device.

15. A communication apparatus, comprising:

a first communication module, configured to receive first configuration information, second configuration information, and third configuration information that are transmitted in a first communication frequency band;

a second communication module, configured to receive first ranging information, second ranging information, and third ranging information that are transmitted in a second communication frequency band, wherein a bandwidth used in the second communication frequency band is greater than a bandwidth used in the first communication frequency band;

a control module, configured to: after completing time synchronization with a first terminal device in the first communication frequency band based on the first configuration information, determine a moment at which the first ranging information arrives, and control the second communication module to receive the first ranging information; and

a calculation module, configured to determine a location of a first device based on time differences of arrival between the first ranging information, the second ranging information, and the third ranging information.

16. The apparatus according to claim 15, wherein:

after determining the moment at which the first ranging information arrives, the control module controls the second communication module to be enabled to receive the first ranging information, and after the first ranging information is received, the control module controls the second communication module to be disabled.

17. The apparatus according to claim 15 or 16, wherein:

the control module is configured to determine, based on the first configuration information, a moment at which the second ranging information arrives and a moment at which the third ranging information arrives.

18. The apparatus according to any one of claims 16 to 17, wherein:

after the first communication module receives the first configuration information, the control module controls the first communication module to be disabled; and

the control module determines, based on the first configuration information, a moment at which the second configuration information arrives, and control the first communication module to be enabled and receive the second configuration information.

19. The apparatus according to any one of claims 15 to 18, wherein

the first configuration information comprises device information of the first terminal device, a device synchronization signal, time setting information, and a data field; and

the first ranging information comprises a ranging frame, and does not comprise the data field.

20. The apparatus according to any one of claims 15 to 19, wherein

the control module is configured to estimate first carrier frequency offset CFO information of the first terminal device based on the first configuration information, and complete time synchronization with the first terminal device in the first communication frequency band based on the first CFO information; and

the control module determines, based on the first CFO information, a moment for enabling the second communication module to receive the first ranging information.

FIG. 1

FIG. 2

FIG. 3

FIG. 4

Type 1 | SYNC | SFD | PHR | Payload |

Type 2 | SYNC | SFD | PHR | Payload | STS |

Type 3 | SYNC | SFD | STS | PHR | Payload |

Type 4 | SYNC | SFD | STS |

FIG. 5

| Octets:1/2 | 0/1 | 0/2 | 0/2/8 | 0/2 | 0/2/8 | Variable | Variable | | Variable | 2/4 |
|---|---|---|---|---|---|---|---|---|---|---|
| Frame Control | Sequence Number | Destination PAN ID | Destination Address | Source PAN ID | Source Address | Auxiliary Security Header | IE | | Frame Payload | FCS |
| | | Addressing fields | | | | | Header IES | Payload IES | | |
| | | MHR | | | | | | MAC Payload | | MFR |

| Bits:0-2 | 3 | 4 | 5 | 6 | 7 | 8 | 9 | 10-11 | 12-13 | 14-15 |
|---|---|---|---|---|---|---|---|---|---|---|
| Frame Type | Security Enabled | Frame Pending | AR | PAN ID Compression | Reserved | Sequence Number Suppression | IE Present | Destination Addressing Mode | Frame Version | Source Addressing Mode |

FIG. 6

FIG. 7

Device1/Device 1

Wideband communication module  |  Narrowband communication module

Device2/Device 2

Narrowband communication module  |  Wideband communication module  |  Calculation module  |  Control module

Data transmission

Positioning and/or ranging

FIG. 8

FIG. 8

Communication apparatus 100

Transceiver unit 110

Processing unit 120

FIG. 9

Communication apparatus 10

Processor
11

Memory
12

Transceiver
13

FIG. 10

## INTERNATIONAL SEARCH REPORT

| International application No. |
| --- |
| **PCT/CN2024/109506** |

| A. | CLASSIFICATION OF SUBJECT MATTER |
| --- | --- |

H04W 52/02(2009.01)i

According to International Patent Classification (IPC) or to both national classification and IPC

| B. | FIELDS SEARCHED |
| --- | --- |

Minimum documentation searched (classification system followed by classification symbols)

IPC:H04L,H04W,H04Q

Documentation searched other than minimum documentation to the extent that such documents are included in the fields searched

Electronic data base consulted during the international search (name of data base and, where practicable, search terms used)

CNKI, 3GPP, CNTXT, WPABSC, WPABS, DWPI, ENTXTC, ENTXT: 超宽带, 测距, 定位, 脉冲宽度, 多径环境, 发射功率, 发射距离, 配置信息, 通信频带, 时间同步, 到达时间差, 载波频率偏移, UWB, ultra wide band, ranging, positioning, pulse width, multipath environment, transmit power, transmit distance, configuration information, communication band, time synchronization, time difference of arrival, carrier frequency offset

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2022066010 A1 (CISCO TECHNOLOGY, INC.) 03 March 2022 (2022-03-03) description, paragraphs 18-110 | 1-20 |
| A | CN 114095855 A (HUAWEI TECHNOLOGIES CO., LTD.) 25 February 2022 (2022-02-25) entire document | 1-20 |
| A | CN 114554590 A (GUANGDONG OPPO MOBILE TELECOMMUNICATIONS CORP., LTD.) 27 May 2022 (2022-05-27) entire document | 1-20 |
| A | WO 2023000617 A1 (SPREADTRUM COMMUNICATIONS (SHANGHAI) CO., LTD.) 26 January 2023 (2023-01-26) entire document | 1-20 |
| A | QUALCOMM. "Views on Scope of NR Positioning Enhancements WI" *3GPP TSG RAN Meeting #90-e, RP-202754*, 11 December 2020 (2020-12-11), entire document | 1-20 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 October 2024** | **31 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/109506**

| Patent document cited in search report | | | Publication date (day/month/year) | Patent family member(s) | | | Publication date (day/month/year) |
|---|---|---|---|---|---|---|---|
| US | 2022066010 | A1 | 03 March 2022 | US | 11828832 | B2 | 28 November 2023 |
| | | | | US | 2024045046 | A1 | 08 February 2024 |
| | | | | WO | 2022046479 | A1 | 03 March 2022 |
| | | | | EP | 4204840 | A1 | 05 July 2023 |
| CN | 114095855 | A | 25 February 2022 | None | | | |
| CN | 114554590 | A | 27 May 2022 | None | | | |
| WO | 2023000617 | A1 | 26 January 2023 | CN | 115701193 | A | 07 February 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311097513